# EUROPÄISCHE PATENTSCHRIFT

(11) **EP 3 497 000 B1**
(45) Veröffentlichungstag und Bekanntmachung des Hinweises auf die Patenterteilung: **15.09.2021**
(21) Anmeldenummer: 17740327.6
(22) Anmeldetag: 05.07.2017
(51) Int. Cl.: B62J 99/00

(54) **VERFAHREN ZUM BETREIBEN EINER DREHMASSENEINRICHTUNG EINES ZWEIRADFAHRZEUGS SOWIE DIE DREHMASSENEINRICHTUNG**
METHOD FOR GYROSCOPE OF TWO-WHEELD VEHICLE AND DEVICE
PROCÉDÉ POUR GYROSCOPE D'UN MOTOCYCLETTE ET DISPOSITIF

(30) Priorität: 10.08.2016 DE 102016214830
(43) Veröffentlichungstag der Anmeldung: 19.06.2019
(73) Patentinhaber: Bayerische Motoren Werke Aktiengesellschaft, 80809 München (DE)
(72) Erfinder: GORDNER, Achim, 85253 Grossberghofen (DE); FISCHER, Stephan, 82178 Puchheim (DE); SEIDL, Josef, 84130 Dingolfing (DE)
(86) Internationale Anmeldenummer: PCT/EP2017/066730
(87) Internationale Veröffentlichungsnummer: WO 2018/028887

(56) Entgegenhaltungen:
- WO-A1-2013/130656
- WO-A1-2014/106547
- WO-A1-2016/026356
- GB-A- 2 465 020
- JP-A- 2012 201 254
- US-A1- 2010 122 859

## Beschreibung

Die Erfindung betrifft ein Verfahren zum Betreiben einer Drehmasseneinrichtung eines Zweiradfahrzeugs, die Drehmasseneinrichtung aufweisend ein erstes Kreiselinstrument und ein zweites Kreiselinstrument, das erste Kreiselinstrument aufweisend eine erste kardanisch gelagerte Drehmasse mit einer ersten Drehachse, wobei die erste Drehmasse drehbar ist, um einen ersten Drehimpuls zu bewirken, und die erste Drehachse kontrolliert räumlich verschwenkbar ist, um ein erstes Drehmoment zu bewirken, das zweite Kreiselinstrument aufweisend eine zweite kardanisch gelagerte Drehmasse mit einer zweiten Drehachse, wobei die zweite Drehmasse drehbar ist, um einen zweiten Drehimpuls zu bewirken, und die zweite Drehachse kontrolliert räumlich verschwenkbar ist, um ein zweites Drehmoment zu bewirken, das Zweiradfahrzeug aufweisend drei orthogonale Fahrzeugachsen, wobei auf das Zweiradfahrzeug das erste Drehmoment und das zweite Drehmoment wirkt.

Außerdem betrifft die Erfindung eine Drehmasseneinrichtung für ein Zweiradfahrzeug, die Drehmasseneinrichtung aufweisend ein erstes Kreiselinstrument, ein zweites Kreiselinstrument und eine elektrische Kontrolleinrichtung, das erste Kreiselinstrument aufweisend eine erste kardanisch gelagerte Drehmasse mit einer ersten Drehachse, einen ersten Drehantrieb zum kontrollierten Drehen der ersten Drehmasse, um einen ersten Drehimpuls zu bewirken, und einen ersten Schwenkantrieb zum kontrollierten räumlichen Verschwenken der ersten Drehachse, um ein erstes Drehmoment zu bewirken, das zweite Kreiselinstrument aufweisend eine zweite kardanisch gelagerte Drehmasse mit einer zweiten Drehachse, einen zweiten Drehantrieb zum kontrollierten Drehen der zweiten Drehmasse, um einen zweiten Drehimpuls zu bewirken, und einen zweiten Schwenkantrieb zum kontrollierten räumlichen Verschwenken der zweiten Drehachse, um ein zweites Drehmoment zu bewirken. Außerdem betrifft die Erfindung ein Zweiradfahrzeug aufweisend Fahrzeugräder und drei orthogonale Fahrzeugachsen.

Aus der WO 2011/115699 A1 ist eine Vorrichtung bekannt, welche aufweist: einen Rahmen; ein Vorderrad und ein Hinterrad, welche mit dem Rahmen verbunden sind; zumindest zwei Gyroskope, welche mit dem Rahmen verbunden sind, wobei jedes Gyroskop ein Schwungrad umfasst; wobei die Vorrichtung außerdem aufweist: eine Vielzahl von Sensoren die eingerichtet sind, eine Ausrichtung des Rahmens, eine Ausrichtung des Vorderrads in Bezug auf den Rahmen, eine Ausrichtung und Drehgeschwindigkeit der Schwungräder, und eine Geschwindigkeit der Vorrichtung festzustellen; und ein elektronisches Steuersystem das eingerichtet ist, wenigstens eines aus der Gruppe aus der Ausrichtung und der Drehgeschwindigkeit von zumindest einem der Schwungräder einzustellen, und zwar, zumindest zu Teilen, basierend auf den Daten von der Vielzahl von Sensoren und einer Eingabe, die vorgesehen ist, zumindest eines aus der Gruppe aus Geschwindigkeit und Richtung der Vorrichtung zu ändern.

Aus der WO 2013/130656 A1 ist ein System bekannt aufweisend: eine Kontrollmomentgyroskopeinrichtung umfassend: ein Schwungrad; einen Schwungradantriebsmotor, um das Schwungrad anzutreiben; ein Gehäuse mit drei Freiheitsgraden, umfassend das Schwungrad und den Schwungradantriebsmotor; und einen oder mehrere Motoren zum unabhängigen Bewegen des Gehäuses in den Freiheitsgraden; und einen Controller zum Kontrollieren einer Lage der Kontrollmomentgyroskopeinrichtung.

Aus dem Dokument WO 2014/106547 A1 ist ein Verfahren bekannt zur Fahrstabilisierung eines motorisierten Zweirads, bei dem zwei nebeneinander angeordnete Kreisel mit zueinander paralleler Drehachse vorhanden sind, wobei die Kreisel jeweils um eine Verschwenkungsachse senkrecht zur Drehachse verschwenkbar, wobei die Verschwenkungsachsen der beiden Kreisel ebenfalls parallel zueinander sind, wobei die Kreisel in zueinander entgegengesetzter Drehrichtung um ihre Drehachsen rotieren, wobei bei einem detektierten instabilen Fahrverhalten des Zweirads die beiden Kreisel um ihre jeweilige Verschwenkungsachse mit einer ersten Winkelgeschwindigkeit verschwenkt werden, wobei die Verschwenkungsrichtungen entgegengesetzt zueinander sind, wobei anschließend die beiden Kreisel um ihre jeweilige Verschwenkungsachse mit einer zweiten Winkelgeschwindigkeit wieder in ihre Ursprungsorientierung zurückverschwenkt werden.

Aus dem Dokument JP 2012 201254 A ist ein Lageregelungssystem bekannt für ein 2-Rad-Fahrzeug, das an einem 2-Rad-Fahrzeug montiert ist und mindestens ein oder mehrere rotierende Schwungräder mit einem kontrollierten Rotationsfreiheitsgrad von mindestens einer Achse pro Schwungrad aufweist. Das Dokument zeigt in einer ersten Ausführung zwei zweiachsige Schwungräder und in einer zweiten Ausführung ein dreiachsiges Schwungrad mit einer kardanischen Aufhängung. Durch Anlegen eines Drehmoments an eines oder mehrere der Schwungräder und Änderung die Richtung der Drehachse jedes der Schwungräder wird ein Kreiselmoment erzeugt. Das Lageregelungssystem für ein 2-Rad-Fahrzeug umfasst Mittel zur gleichzeitigen Steuerung von mindestens einer von einer Rollbewegung, einer Gierbewegung und einer Nickbewegung des 2-Rad-Fahrzeugs und die gesteuerte Variable des Kreiselmoments wird entsprechend der Sensorinformation zur Erfassung der Bewegung des Zweiradfahrzeugs bestimmt.

Der Erfindung liegt die Aufgabe zugrunde, ein eingangs genanntes Verfahren zu verbessern. Außerdem liegt der Erfindung die Aufgabe zugrunde, eine eingangs genannte Drehmasseneinrichtung baulich und/oder funktional zu verbessern. Außerdem liegt der Erfindung die Aufgabe zugrunde, ein eingangs genanntes Zweiradfahrzeug baulich und/oder funktional zu verbessern.

Die Lösung der Aufgabe erfolgt mit einem Verfahren mit den Merkmalen des Anspruchs 1.

Die erste Drehmasse und die zweite Drehmasse können mit derselben Drehzahl gedreht werden. Die erste Drehmasse und die zweite Drehmasse können mit unterschiedlichen Drehzahlen gedreht werden. "Kontrolliert" bedeutet vorliegend insbesondere elektrisch gesteuert und/oder geregelt. Die Drehmomente können jeweils einen Anteil um die erste Drehachse, einen Anteil um die zweite Drehachse und/oder einen Anteil um die dritte Drehachse aufweisen. Die Drehachsen können derart zueinander verschwenkt werden, dass sich Anteile des ersten Drehmoments und des zweiten Drehmoments um die erste Fahrzeugachse addieren. Die Drehachsen können derart zueinander verschwenkt werden, dass Anteile des ersten Drehmoments und des zweiten Drehmoments um die beiden anderen Fahrzeugachsen einander entgegenwirken. Das Gesamtmoment kann sich mit der Zeit ändern. Das Gesamtmoment kann über die Zeit einen vorgegebenen Verlauf aufweisen.

Die erste Drehachse und die zweite Drehachse können derart zueinander verschwenkt werden, dass Singularitäten umgangen werden. Die erste Drehachse und die zweite Drehachse können derart zueinander verschwenkt werden, dass das Gesamtmoment einen lückenlosen, stetigen und/oder kontinuierlichen Verlauf aufweist. Die erste Drehachse und die zweite Drehachse können zueinander um 180° phasenverschoben verschwenkt werden.

Die Fahrzeugachsen können eine Rollachse, eine Nickachse und eine Gierachse sein. Die erste Fahrzeugachse kann die Rollachse, die Nickachse oder die Gierachse sein.

Die erste Drehachse und/oder die zweite Drehachse können/kann verschwenkt werden, um eine Fahrzeugbewegung zu kompensieren. Die erste Drehachse und/oder die zweite Drehachse können/kann verschwenkt werden, um eine Wirkung einer beabsichtigten Fahrzeugbewegung auf eine Ausrichtung der Drehachsen zu kompensieren. Eine beabsichtigte Fahrzeugbewegung kann beispielsweise durch eine Fahrbahnkrümmung oder eine bewusst eingeleitete Schräglage verursacht sein.

Die erste Drehachse und/oder die zweite Drehachse können/kann verschwenkt werden, um eine Fahrzeugschräglage zu beeinflussen. Die erste Drehachse und/oder die zweite Drehachse können/kann verschwenkt werden, um eine Fahrzeugschräglage zu erhöhen oder zu verringern.

Die erste Drehachse und/oder die zweite Drehachse können/kann verschwenkt werden, um ein Kraftschlusspotential eines Fahrzeugreifens zu beeinflussen. Die erste Drehachse und/oder die zweite Drehachse können/kann verschwenkt werden, um eine Radlastverlagerung auf einen Fahrzeugreifen zu beeinflussen.

Außerdem wird die der Erfindung zugrundeliegende Aufgabe gelöst mit einer Drehmasseneinrichtung mit den Merkmalen des Anspruchs 7.

Das erste Kreiselinstrument und das zweite Kreiselinstrument können baugleich ausgeführt sein. Die Kreiselinstrumente können jeweils ein Gehäuse aufweisen. Die Drehantriebe können jeweils als Elektromotor ausgeführt sein. Als Drehantrieb kann jeweils ein Fahrzeugantrieb dienen. Die Schwenkantriebe können jeweils als Elektromotor ausgeführt sein. Die Drehachsen können jeweils um zwei orthogonale Schwenkachsen verschwenkbar sein. Die Drehachsen können jeweils räumlich um 360° verschwenkbar sein. Die elektrische Kontrolleinrichtung kann mit den Kreiselinstrumenten jeweils signalleitend verbunden sein. Die elektrische Kontrolleinrichtung kann zum steuernden und/oder regelnden Kontrollieren dienen. Die elektrische Kon trolleinrichtung kann auch als Steuergerät bezeichnet werden. Die elektrische Kontrolleinrichtung kann eine Recheneinrichtung aufweisen. Die elektrische Kontrolleinrichtung kann eine Speichereinrichtung aufweisen. Die elektrische Kontrolleinrichtung kann mit wenigstens einer weiteren elektrischen Kontrolleinrichtung des Zweiradfahrzeugs signalverbunden sein, insbesondere über ein BUS-System, wie CAN-Bus. Außerdem wird die der Erfindung zugrundeliegende Aufgabe gelöst mit einem Zweiradfahrzeug mit den Merkmalen des Anspruchs 8.

Das Zweiradfahrzeug kann ein einspuriges Fahrzeug sein. Das Zweiradfahrzeug kann ein Kraftfahrzeug sein. Das Zweiradfahrzeug kann ein Kraftrad sein. Das Zweiradfahrzeug kann ein Motorrad sein. Das Zweiradfahrzeug kann ein Motorroller sein. Das Zweiradfahrzeug kann wenigstens einen Fahrzeugantrieb aufweisen. Das Zweiradfahrzeug kann wenigstens ein antreibbares Fahrzeugrad aufweisen. Das Zweiradfahrzeug kann ein Vorderrad und ein Hinterrad aufweisen. Der wenigstens eine Fahrzeugantrieb kann eine Brennkraftmaschine sein. Der wenigstens eine Fahrzeugantrieb kann eine elektrische Maschine sein. Die elektrische Maschine kann als Motor betreibbar sein. Die elektrische Maschine kann als Generator betreibbar sein. Das Zweiradfahrzeug kann einen elektrischen Energiespeicher aufweisen. Der elektrische Energiespeicher kann ein Akkumulator sein. Der elektrische Energiespeicher kann ein Kondensator, insbesondere ein Superkondensator, sein. Die drei Zweiradfahrzeugachsen können eine Rollachse, eine Nickachse und eine Gierachse sein.

Das Zweiradfahrzeug kann eine Fahrzeuglängsachse aufweisen. Das Zweiradfahrzeug kann um die Fahrzeuglängsachse labil sein. Die Rollachse kann zur Fahrzeuglängsachse parallel sein. Die Nickachse kann zur Rollachse senkrecht und zu einer Fahrbahnoberfläche parallel sein. Die Gierachse kann zur Rollachse und zu einer Fahrbahnoberfläche senkrecht sein.

Zusammenfassend und mit anderen Worten dargestellt ergibt sich somit durch die Erfindung unter anderem ein Gyrokreisel zur Schräglagenstabilisierung eines Motorrads. Zwei über drei Achsen aktiv gesteuerte Kreisel können miteinander so kombiniert werden, dass sich die beiden Reaktionsmomente, bestehend aus einem gewünschten Rollmoment und parasitärem Nick- und Giermoment, ständig zu einem kontinuierlichen und stetigen Stütz-/Rollmoment ergänzen. Eine Trajektorie und Geschwindigkeiten, mit denen sich die beiden Kreiselachsen kontinuierlich bewegen, soll so gewählt werden, dass Singularitäten in einem gewünschten Roll-/Nutzmoment umgangen werden. Auf diesen Trajektorien können neben dem stabilisierenden Rollmoment zusätzlich parasitäre Nick- und Giermomente entstehen. Diese können durch den zweiten Kreisel, dessen Trajektorie phasenverschoben ist, ausgeglichen werden. Mithilfe einer elektronischen Lageerkennung eines Fahrzeugs und einer hierzu passenden Regelung können ungewollte Kreiselreaktionen, beispielsweise Bergauffahrt oder bewusst durch den Fahrer eingeleitete Schräglagen, durch aktive Steuerung der beiden Kreiselachsen aufgehoben werden. Zwei Gyroskope können sich additiv unterstützen. Trajektorien, deren Singularitätspunkte vermieden werden, können einen periodischen Betrieb auf der Trajektorie gewährleisten. Parasitäre Reaktionsmomente können durch phasenverschobene Trajektorien der beiden Kreisel aufgehoben werden. Eine elektronische Ansteuerung kann Fahrbahnunebenheiten und gewünschte Längsdynamiken, wie Bergauffahrten, erkennen und die Kreisel entsprechend ansteuern, sodass sich kein ungewolltes Reaktionsmoment einstellt.

Mit der Erfindung wird die Erzeugung eines kontinuierlichen Stützmoments ermöglicht. Ein Einbauaufwand, ein Bauraumbedarf, ein Kostenaufwand und/oder ein Fertigungsaufwand werden reduziert. Eine aktive und kontinuierliche Schräglagenstabilisierung wird ermöglicht. Eine Bauteilmasse und -größe wird reduziert. Ein Komfort wird erhöht. Eine Sicherheit wird erhöht. Eine Fahrdynamik kann beeinflusst werden.

Nachfolgend werden Ausführungsbeispiele der Erfindung unter Bezugnahme auf Figuren näher beschrieben. Aus dieser Beschreibung ergeben sich weitere Merkmale und Vorteile.

Es zeigen schematisch und beispielhaft:
- Fig. 1: ein Zweiradfahrzeug mit einer Drehmasseneinrichtung mit zwei Kreiselinstrumenten,
- Fig. 2: ein Kreiselinstrument mit einer kardanisch gelagerten Drehmasse und
- Fig. 3: Trajektorien und Geschwindigkeitsprofile einer Drehmasse.

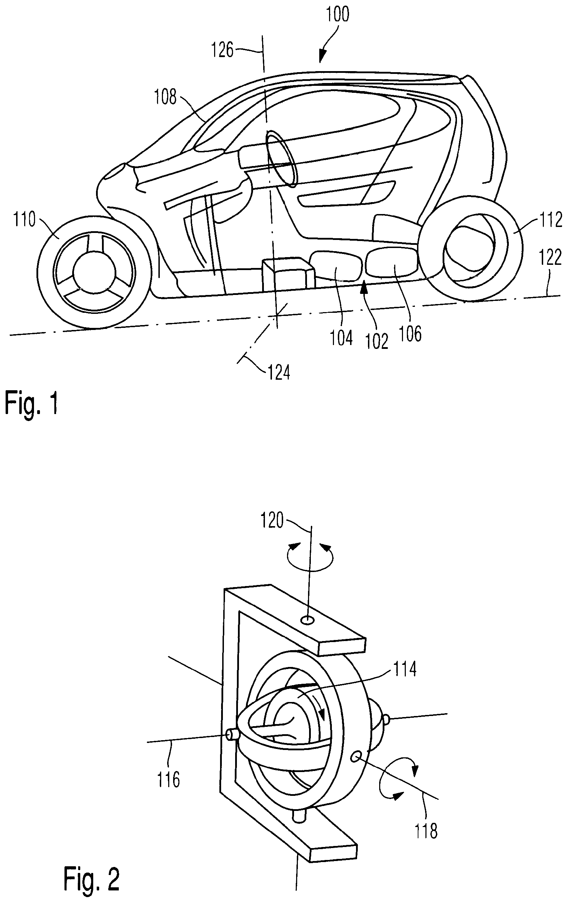

Fig. 1 zeigt ein Zweiradfahrzeug 100 mit einer Drehmasseneinrichtung 102 mit zwei Kreiselinstrumenten 104, 106. Das Zweiradfahrzeug 100 weist einen Rahmen, eine Verkleidung 108 und zwei Fahrzeugräder 110, 112 auf. Das vordere Fahrzeugrad 110 ist lenkbar, das hinter Fahrzeugrad 112 ist antreibbar. Das Zweiradfahrzeug 100 ist ein Einspurfahrzeug und damit systembedingt instabil.

Die Kreiselinstrumente 104, 106 sind jeweils baugleich ausgeführt. Fig. 2 zeigt ein Kreiselinstrument, wie 104, 106. Die Kreiselinstrumente 104, 106 weisen jeweils eine kardanisch gelagerte Drehmasse, wie 114, auf. Die Drehmasse 114 ist um eine Drehachse 116 kontrolliert drehbar, um einen Drehimpuls zu bewirken. Die Kreiselinstrumente 104, 106 weisen jeweils einen Drehantrieb zum Drehen der Drehmasse 114 auf. Die Drehachse 116 ist um zwei orthogonale Schwenkachsen 118, 120 kontrolliert räumlich verschwenkbar, um ein Drehmoment zu bewirken. Die Drehachse 116 ist sowohl um die Schwenkachse 118 als auch um die Schwenkachse 120 frei um 360° verschwenkbar. Die Kreiselinstrumente 104, 106 weisen jeweils einen Schwenkantrieb zum Verschwenken der Drehmasse 114 auf. Der Schwenkantrieb weist für die Schwenkachsen 118, 120 jeweils einen Motor auf.

Die Drehmomente der Kreiselinstrumente 104, 106 wirken auf das Zweiradfahrzeug 100. Das Zweiradfahrzeug 100 weist eine Rollachse 122, eine Nickachse 124 und eine Gierachse 126 auf. Die Drehmomente der Kreiselinstrumente 104, 106 weisen jeweils einen Anteil um die Rollachse 122, einen Anteil um die Nickachse 124 und/oder einen Anteil um die Gierachse 126 auf.

Die Kreiselinstrumente 104, 106 werden derart kontrolliert betätigt, dass sich die Anteile der Drehmomente der Kreiselinstrumente 104, 106 um eine erste Fahrzeugachse, beispielsweise um die Rollachse 122, zu einem vorgegebenen Gesamtmoment addieren und sich die Anteile der Drehmomente der Kreiselinstrumente 104, 106 um eine der beiden anderen Fahrzeugachsen, beispielsweise um die Nickachse 124 und die Gierachse 126, kompensieren.

Das vorgegebenen Gesamtmoment wird beispielsweise derart vorgegeben, dass eine Fahrzeugschräglage bei Kurvenfahrt verringert wird, wenn durch Wegrutschen der Fahrzeugräder durch mangelnden Kraftschluss zur Fahrbahn ein Sturz zur kurveninneren Seite droht, oder eine Fahrzeugschräglage bei Kurvenfahrt erhöht wird, wenn durch plötzlich wiedergewonnene Haftreibung nach einem Wegrutschen der Fahrzeugräder ein plötzliches Aufrichten und ein Überschlagen zur kurvenäußeren Seite droht.

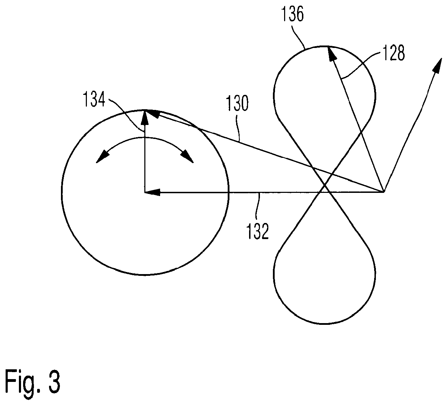

Fig. 3 zeigt Trajektorien und Geschwindigkeitsprofile der Drehmasse 114 eines Kreiselinstruments, wie 104, 106. Die Drehmasse 114 dreht um die Drehachse 116, sodass ein Drehimpuls 128 bewirkt wird. Die Drehachse 116 wird verschwenkt, um ein auf das Zweiradfahrzeug 100 wirkendes Drehmoment 130 zu erzeugen. Das Drehmoment 130 weist einen Anteil 132 um die Rollachse 122 und parasitäre Anteile 134 um die anderen Fahrzeugachsen auf. Eine Verschwenkbewegung der Drehachse 116 erfolgt entlang einer Trajektorie 136. Die Trajektorie 136 wird derart gewählt, dass Singularitäten im vorgegebenen Drehmoment 130 umgangen werden.

### Bezugszeichen

- 100: Zweiradfahrzeug
- 102: Drehmasseneinrichtung
- 104: Kreiselinstrument
- 106: Kreiselinstrument
- 108: Verkleidung
- 110: Fahrzeugrad
- 112: Fahrzeugrad
- 114: Drehmasse
- 116: Drehachse
- 118: Schwenkachse
- 120: Schwenkachse
- 122: Rollachse
- 124: Nickachse
- 126: Gierachse
- 128: Drehimpuls
- 130: Drehmoment
- 132: Anteil
- 134: parasitäre Anteile
- 136: Trajektorie

## Patentansprüche

1. Verfahren zum Betreiben einer Drehmasseneinrichtung (102) eines Zweiradfahrzeugs (100), die Drehmasseneinrichtung (102) aufweisend ein erstes Kreiselinstrument (104) und ein zweites Kreiselinstrument (106), das erste Kreiselinstrument (104) aufweisend eine erste kardanisch gelagerte Drehmasse (114) mit einer ersten Drehachse (116), wobei die erste Drehmasse (114) kontrolliert drehbar ist, um einen ersten Drehimpuls (128) zu bewirken, und die erste Drehachse (116) kontrolliert räumlich verschwenkbar ist, um ein erstes Drehmoment (130) zu bewirken, das zweite Kreiselinstrument (106) aufweisend eine zweite kardanisch gelagerte Drehmasse mit einer zweiten Drehachse, wobei die zweite Drehmasse kontrolliert drehbar ist, um einen zweiten Drehimpuls zu bewirken, und die zweite Drehachse kontrolliert räumlich verschwenkbar ist, um ein zweites Drehmoment zu bewirken, das Zweiradfahrzeug aufweisend drei orthogonale Fahrzeugachsen (122, 124, 126), wobei auf das Zweiradfahrzeug (100) das erste Drehmoment (130) und das zweite Drehmoment wirkt, wobei die erste Drehmasse (114) und die zweite Drehmasse mit einer derartigen Drehgeschwindigkeit gedreht und die erste Drehachse (116) und die zweite Drehachse derart zueinander verschwenkt werden, dass sich Anteile (132) des ersten Drehmoments (130) und des zweiten Drehmoments um eine erste Fahrzeugachse zu einem kontinuierlichen und stetigen vorgegebenen Gesamtmoment ergänzen und sich Anteile (134) des ersten Drehmoments (130) und des zweiten Drehmoments um die beiden anderen Fahrzeugachsen kompensieren, und die erste Drehachse (116) und die zweite Drehachse zueinander phasenverschoben verschwenkt werden, um parasitäre Reaktionsmomente aufzuheben.

2. Verfahren nach Anspruch 1, **dadurch gekennzeichnet, dass** die erste Drehachse (116) und die zweite Drehachse derart zueinander verschwenkt werden, dass Singularitäten umgangen werden.

3. Verfahren nach wenigstens einem der vorhergehenden Ansprüche, **dadurch gekennzeichnet, dass** die Fahrzeugachsen eine Rollachse (122), eine Nickachse (124) und eine Gierachse (126) sind und die erste Fahrzeugachse die Rollachse (122), die Nickachse (124) oder die Gierachse (126) ist.

4. Verfahren nach wenigstens einem der vorhergehenden Ansprüche, **dadurch gekennzeichnet, dass** die erste Drehachse (116) und/oder die zweite Drehachse verschwenkt werden, um eine Fahrzeugbewegung zu kompensieren.

5. Verfahren nach wenigstens einem der vorhergehenden Ansprüche, **dadurch gekennzeichnet, dass** die erste Drehachse (116) und/oder die zweite Drehachse verschwenkt werden, um eine Fahrzeugschräglage zu beeinflussen.

6. Verfahren nach wenigstens einem der vorhergehenden Ansprüche, **dadurch gekennzeichnet, dass** die erste Drehachse (116) und/oder die zweite Drehachse verschwenkt werden, um ein Kraftschlusspotential eines Fahrzeugreifens zu beeinflussen.

7. Drehmasseneinrichtung (102) für ein Zweiradfahrzeug (100), die Drehmasseneinrichtung (102) aufweisend ein erstes Kreiselinstrument (104), ein zweites Kreiselinstrument (106) und eine elektrische Kontrolleinrichtung, das erste Kreiselinstrument (104) aufweisend eine erste kardanisch gelagerte Drehmasse (114) mit einer ersten Drehachse (116), einen ersten Drehantrieb zum kontrollierten Drehen der ersten Drehmasse (114), um einen ersten Drehimpuls (128) zu bewirken, und einen ersten Schwenkantrieb zum kontrollierten räumlichen Verschwenken der ersten Drehachse (116), um ein erstes Drehmoment (130) zu bewirken, das zweite Kreiselinstrument (106) aufweisend eine zweite kardanisch gelagerte Drehmasse mit einer zweiten Drehachse, einen zweiten Drehantrieb zum kontrollierten Drehen der zweiten Drehmasse, um einen zweiten Drehimpuls zu bewirken, und einen zweiten Schwenkantrieb zum kontrollierten räumlichen Verschwenken der zweiten Drehachse, um ein zweites Drehmoment zu bewirken, wobei die Drehmasseneinrichtung (102) zur Durchführung eines Verfahrens nach wenigstens einem der Ansprüche 1 bis 6 geeignet ist.

8. Zweiradfahrzeug (100) aufweisend Fahrzeugräder (110, 112) und drei orthogonale Fahrzeugachsen (122, 124, 126), **dadurch gekennzeichnet, dass** das Zweiradfahrzeug (100) eine Drehmasseneinrichtung (102) nach Anspruch 7 aufweist.

## Claims

1. Method for operating a rotating mass device (102) of a two-wheeled vehicle (100), the rotating mass device (102) having a first gyroscope instrument (104) and a second gyroscope instrument (106), the first gyroscope instrument (104) having a first cardanically mounted rotating mass (114) with a first rotational axis (116), it being possible for the first rotating mass (114) to be rotated in a controlled manner, in order to bring about a first angular momentum (128), and it being possible for the first rotational axis (116) to be pivoted spatially in a controlled manner, in order to bring about a first torque (130), the second gyroscope instrument (106) having a second cardanically mounted rotating mass with a second rotational axis, it being possible for the second rotating mass to be rotated in a controlled manner, in order to bring about a second angular momentum, and it being possible for the second rotational axis to be pivoted spatially in a controlled manner, in order to bring about a second torque, the two-wheeled vehicle having three orthogonal vehicle axes (122, 124, 126), the first torque (130) and the second torque acting on the two-wheeled vehicle (100), the first rotating mass (114) and the second rotating mass being rotated at a rotational speed which is such that, and the first rotational axis (116) and the second rotational axis being pivoted with respect to one another such that, portions (134) of the first torque (130) and of the second torque about a first vehicle axis are added to form a continuous and constant predefined overall torque, and portions (134) of the first torque (130) and of the second torque about the two other vehicle axes are equalized, and the first rotational axis (116) and the second rotational axis are pivoted in a phase-shifted manner with respect to one another, in order to cancel out parasitic reaction torques.

2. Method according to Claim 1, **characterized in that** the first rotational axis (116) and the second rotational axis are pivoted with respect to one another in such a way that singularities are avoided.

3. Method according to at least one of the preceding claims, **characterized in that** the vehicle axes are a roll axis (122), a pitch axis (124) and a yaw axis (126), and the first vehicle axis is the roll axis (122), the pitch axis (124) or the yaw axis (126).

4. Method according to at least one of the preceding claims, **characterized in that** the first rotational axis (116) and/or the second rotational axis are/is pivoted, in order to compensate for a vehicle movement.

5. Method according to at least one of the preceding claims, **characterized in that** the first rotational axis (116) and/or the second rotational axis are/is pivoted, in order to influence a vehicle banking position.

6. Method according to at least one of the preceding claims, **characterized in that** the first rotational axis (116) and/or the second rotational axis are/is pivoted, in order to influence a traction potential of a vehicle tyre.

7. Rotating mass device (102) for a two-wheeled vehicle (100), the rotating mass device (102) having a first gyroscope instrument (104), a second gyroscope instrument (106) and an electric control device, the first gyroscope instrument (104) having a first cardanically mounted rotating mass (114) with a first rotational axis (116), a first rotary drive for the controlled rotation of the first rotating mass (114), in order to bring about a first angular momentum (128), and a first pivoting drive for the controlled spatial pivoting of the first rotational axis (116), in order to bring about a first torque (130), the second gyroscope instrument (106) having a second cardanically mounted rotating mass with a second rotational axis, a second rotary drive for the controlled rotation of the second rotating mass, in order to bring about a second angular momentum, and a second pivoting drive for the controlled spatial pivoting of the second rotational axis, in order to bring about a second torque, the rotating mass device (102) being suitable for carrying out a method according to at least one of Claims 1 to 6.

8. Two-wheeled vehicle (100) having vehicle wheels (110, 112) and three orthogonal vehicle axes (122, 124, 126), **characterized in that** the two-wheeled vehicle (100) has a rotating mass device (102) according to Claim 7.

## Revendications

1. Procédé de fonctionnement d'un dispositif à masses rotatives (102) d'un véhicule à deux roues (100), le dispositif à masses rotatives (102) comportant un premier instrument gyroscopique (104) et un deuxième instrument gyroscopique (106), le premier instrument gyroscopique (104) comportant une première masse rotative (114) montée sur cardan et pourvue d'un premier axe de rotation (116), la première masse rotative (114) pouvant tourner de manière commandée afin de produire un premier moment angulaire (128), et le premier axe de rotation (116) pouvant pivoter de manière commandée dans l'espace afin de produire un premier couple (130), le deuxième instrument gyroscopique (106) comportant une deuxième masse rotative montée sur cardan et pourvue d'un deuxième axe de rotation, la deuxième masse rotative pouvant tourner de manière commandée afin de produire un deuxième moment angulaire, et le deuxième axe de rotation pouvant pivoter de manière commandée dans l'espace afin de produire un deuxième couple, le véhicule à deux roues comportant trois axes de véhicule orthogonaux (122, 124, 126), le premier couple (130) et le deuxième couple agissant sur le véhicule à deux roues (100), la première masse rotative (114) et la deuxième masse rotative tournant à une vitesse de rotation, et le premier axe de rotation (116) et le deuxième axe de rotation pivotant l'un par rapport l'autre, de manière à ce que des composantes (132) du premier couple (130) et du deuxième couple sur un premier axe de véhicule se complètent pour donner un couple total spécifié continu et stable et des composantes (134) du premier couple (130) et du deuxième couple sur les deux autres axes de véhicule se compensent, et le premier axe de rotation (116) et le deuxième axe de rotation pivotant en étant déphasés l'un par rapport à l'autre afin de supprimer les moments de réaction parasites.

2. Procédé selon la revendication 1, **caractérisé en ce que** le premier axe de rotation (116) et le deuxième axe de rotation pivotent l'un par rapport à l'autre de manière à contourner les singularités.

3. Procédé selon l'une au moins des revendications précédentes, **caractérisé en ce que** les axes de véhicule sont un axe de roulis (122), un axe de tangage (124) et un axe de lacet (126) et le premier axe de véhicule est l'axe de roulis (122), l'axe de tangage (124) ou l'axe de lacet (126).

4. Procédé selon l'une au moins des revendications précédentes, **caractérisé en ce que** le premier axe de rotation (116) et/ou le deuxième axe de rotation pivotent afin de compenser un mouvement du véhicule.

5. Procédé selon l'une au moins des revendications précédentes, **caractérisé en ce que** le premier axe de rotation (116) et/ou le deuxième axe de rotation pivotent afin d'influer sur une position inclinée du véhicule.

6. Procédé selon l'une au moins des revendications précédentes, **caractérisé en ce que** le premier axe de rotation (116) et/ou le deuxième axe de rotation pivotent afin d'influer sur un potentiel de liaison en force d'un pneumatique de véhicule.

7. Dispositif à masses rotatives (102) destiné à un véhicule à deux roues (100), le dispositif à masses rotatives (102) comportant un premier instrument gyroscopique (104), un deuxième instrument gyroscopique (106) et un dispositif de commande électrique, le premier instrument gyroscopique (104) comportant une première masse rotative montée sur cardan (114) et pourvue d'un premier axe de rotation (116), un premier entraînement en rotation destiné à faire tourner de manière commandée la première masse rotative (114) afin de produire un premier moment angulaire (128), et un premier entraînement à pivotement destiné à faire pivoter de manière commandée dans l'espace le premier axe de rotation (116) afin de produire un premier couple (130), le deuxième instrument gyroscopique (106) comportant une deuxième masse rotative montée sur cardan et pourvue d'un deuxième axe de rotation, un deuxième entraînement en rotation destiné à faire tourner de manière commandée la deuxième masse en rotation afin de produire un deuxième moment angulaire, et un deuxième entraînement à pivotement destiné à faire pivoter de manière commandée le deuxième axe de rotation afin de produire un deuxième couple, le dispositif à masses rotatives (102) étant adapté pour mettre en œuvre un procédé selon l'une au moins des revendications 1 à 6.

8. Véhicule à deux roues (100) comportant des roues de véhicule (110, 112) et trois axes de véhicule orthogonaux (122, 124, 126), **caractérisé en ce que** le véhicule à deux roues (100) comporte un dispositif à masses rotatives (102) selon la revendication 7.
